# EUROPÄISCHE PATENTSCHRIFT

(11) **EP 2 978 580 B1**
(45) Veröffentlichungstag und Bekanntmachung des Hinweises auf die Patenterteilung: **10.05.2017**
(21) Anmeldenummer: 14715560.0
(22) Anmeldetag: 25.03.2014
(51) Int. Cl.: B29C 44/34, B29C 44/60, B29K 23/00, B29K 25/00

(54) **VERFAHREN ZUR HERSTELLUNG TREIBMITTELARMER GESCHÄUMTER KUNSTSTOFFFORMTEILE**
METHOD FOR PRODUCING LOW-PROPELLANT FOAMED PLASTIC MOULDED PARTS
PROCÉDÉ DE FABRICATION DE PIÈCES MOULÉES EN MATIÈRE PLASTIQUE PAUVRES EN AGENT D'EXPANSION

(30) Priorität: 25.03.2013 DE 102013205253
(43) Veröffentlichungstag der Anmeldung: 03.02.2016
(73) Patentinhaber: Kluth Dachbaustoffe GmbH, 30890 Barsinghausen (DE)
(72) Erfinder: TEKLENBURG, Theodor, 87748 Fellheim (DE); KLUTH, Marcus, 30892 Barsinghausen (DE)
(74) Vertreter: Taruttis, Stefan Georg
(86) Internationale Anmeldenummer: PCT/EP2014/055993
(87) Internationale Veröffentlichungsnummer: WO 2014/154713

(56) Entgegenhaltungen:
- EP-A1- 0 249 157
- EP-A1- 0 540 271
- EP-A2- 0 258 669
- US-A- 5 385 698

## Beschreibung

Die vorliegende Erfindung betrifft eine Vorrichtung und ein Verfahren zur Herstellung von geschäumten Kunststoffformteilen durch Vorschäumen treibmittelhaltiger Granulate aus Kunststoff zu Perlen, insbesondere aus Polystyrol, mit anschließendem Formen der Perlen zu einem Kunststoffformteil, das sich insbesondere durch einen niedrigen Gehalt an Treibmittel und eine hohe Formstabilität auszeichnet. Aufgrund des niedrigen Gehalts an Treibmittel und der damit verbundenen verringerten inneren Spannung in den Formteilen sowie verringerten Ausgasung von Treibmittel im Anschluss an das Formen zeichnen sich die Kunststoffformteile bevorzugt durch eine geringe Nachschwindung sowie weiter dadurch aus, dass sie nach dem Formen nur einer verkürzten Lagerung bedürfen. Die Vorrichtung und das Verfahren sind eingerichtet, dass der Treibmittelgehalt des geschäumten Kunststoffformteils überwacht wird und bevorzugt gesteuert bzw. geregelt wird.

### Stand der Technik

Zur Herstellung von geschäumten Kunststoffformteilen ist aus der DE 20 2006 019 893 U1 bekannt, Granulate aus expandierbarem Material mit einem Gehalt an Treibmittel durch thermische Behandlung vorzuschäumen, wodurch ein Teil des Treibmittels entweicht. Das zu Perlen vorgeschäumte Granulat wird für einige Stunden zwischengelagert, bevor es zum Ausschäumen in Blockformen gegeben wird. Das Ausschäumen erfolgt durch thermische Behandlung der durch das Vorschäumen erhaltenen Perlen in einer Form, wobei die Perlen durch die Volumenexpansion beim Ausschäumen zu einem Kunststoffformteil verschweißen.

Weiterhin ist es bekannt, das Ausschäumen zu Kunststoffformteilen in einer Blockform mit verschieblicher Wand durchzuführen.

Die EP 1 068 943 A2 beschreibt ein Verfahren zum mehrfachen Schäumen von expandierbaren Kunststoffen, in dem das vorgeschäumte Material zur Erzielung niedriger Schüttdichten in zumindest einem weiteren Schritt nachgeschäumt wird. Die Herstellung von Kunststoffformteilen wird nicht beschrieben.

Die durch bekannte Verfahren hergestellten Kunststoffformteile werden aufgrund ihres hohen Restgehalts an Treibmittel für einige Tage bis Wochen gelagert, um den Treibmittelgehalt in den geschäumten Kunststoffformteilen zu verringern. Erfolgt die Lagerung für eine zu kurze Zeitspanne, so dass sich der Treibmittelgehalt nicht stark genug verringert, neigen solche Kunststoffformteile aufgrund der fortgesetzten Entweichung des Treibmittels zur Nachschwindung. Weiterhin haben durch bekannte Verfahren hergestellte Kunststoffformteile den Nachteil, dass sie durch den hohen Gehalt an Resttreibmittel bei hoher Sonneneinstrahlung nachblähen und sich dadurch verformen. Der Restgehalt an Treibmittel in den Kunststoffformteilen wird daher als nachteilig angesehen.

Die EP 0249157 A1 beschreibt ein Verfahren zur Herstellung von expandiertem Polystyrol, bei dem treibmittelhaltige Polystyrolkugeln vorexpandiert werden, zum Druckausgleich in geschlossenen Behältern gelagert werden und mit Dampfbeheizung in einer geschlossenen Form expandiert werden, wobei das Treibmittel aus dem Abdampf kondensiert wird.

Die US 5,385,698 A beschreibt, dass bei der Herstellung von expandiertem Polystyrol treibmittelhaltige, expandierte Kunststoffperlen in einem heißen Luftstrom erwärmt werden, um den Treibmittelgehalt auf ein Maß zu senken, der bei der anschließenden Erwärmung in einer Form eine Expansion erlaubt und zu einer kürzeren anschließenden Lagerung des Formteils führt.

Die EP 0540271 A1 beschreibt ein Verfahren zur Herstellung von Polymerpartikeln, die mit einem Treibmittel imprägniert sind, durch Erwärmen einer Dispersion der Polymerpartikel in einer Mischung aus Treibmittel und Wasser unter Druck und erhöhter Temperatur. Zur Analyse des von den Partikeln aufgenommenen Treibmittels kann die Thermogravimetrie oder Chromatographie eingesetzt werden.

Die EP 0258669 A2 beschreibt das Vorexpandieren von Pellets, die eingemischte anorganische Materialien, ein Lösungsmittel, ein Treibmittel und chloriertes Vinylchloridharz enthalten. Der Gehalt der vorexpandierten Partikel an Treibmittel und Lösungsmittel wird per Gaschromatographie in einer Lösung der vorexpandierten Partikel in Tetrahydrofuran gemessen.

### Aufgabe der Erfindung

Es ist die Aufgabe der vorliegenden Erfindung, eine alternative Vorrichtung und ein damit durchführbares alternatives Verfahren zur Herstellung treibmittelarmer geschäumter Kunststoffformteile bereitzustellen, die sich bevorzugt durch einen geringen Gehalt an Treibmittel bzw. Resttreibmittel auszeichnen und daher nach dem Formen einer gegenüber durch bekannte Verfahren hergestellten geschäumten Formteilen verringerten Lagerdauer zur Verringerung des Treibmittelgehalts bedürfen.

Bevorzugt soll das Verfahren eine signifikant kürzere Lagerdauer aufweisen, um geschäumte Formteile mit niedrigem Gehalt an Treibmittel herzustellen. Bevorzugt zeichnet sich das Verfahren dadurch aus, dass die damit hergestellten geschäumten Kunststoffformteile eine verringerte Nachschwindung bzw. eine erhöhte Dimensionsstabilität aufweisen, insbesondere bei Erwärmung, z.B. auf bis zu 80 °C oder durch Sonnenstrahlung.

### Allgemeine Beschreibung der Erfindung

Die Erfindung löst diese Aufgabe mit den Merkmalen der Ansprüche, insbesondere durch ein Verfahren, bei dem Granulat aus expandierbarem Kunststoff mit einem Ausgangsgehalt an Treibmittel bereitgestellt, in einen Vorschäumer, der insbesondere ein Druckvorschäumer ist, transportiert und durch eine erste thermische Behandlung zu Perlen vorgeschäumt wird, die einen gegenüber dem Granulat verringerten Treibmittelgehalt aufweisen. Das Verfahren zeichnet sich dadurch aus, dass mittels eines Detektors der Treibmittelgehalt von Abgas, das das Granulat während des Transportierens mittels einer Transporteinrichtung in den Vorschäumer umströmt, und/oder der Treibmittelgehalt von Abgas aus dem Vorschäumer und/oder der Treibmittelgehalt von Abgas, das Perlen umströmt, bestimmt wird. Für die Zwecke der Erfindung ist Abgas ein Gas, das aus der Transporteinrichtung oder aus dem Vorschäumer stammt und umfasst Abdampf, Dampf, Luft bzw. ein Gemisch aus Luft, Wasserdampf, Stickstoff, optional Kohlenstoffoxid, mit Treibmittel.

Bevorzugt weist das Verfahren eine in Abhängigkeit von Meßsignalen für den Treibmittelgehalt in dem Abgas aus der Transporteinrichtung und/oder in dem Abgas aus dem Vorschäumer gesteuerte Temperierung und/oder Umströmung des Granulats und/oder der Perlen mit Zugas, das insbesondere Temperiermedium, z.B. Dampf, oder Luft sein kann, auf, z.B. um deren Treibmittelgehalt auf einen vorbestimmten Gehalt einzustellen. Optional werden die Perlen im Anschluss an das Vorschäumen und vor dem Formen in ein Puffersilo gefüllt und dort von Zugas umströmt, wobei der Treibmittelgehalt des die Perlen in dem Puffersilo umströmenden Abgases zusätzlich oder alternativ zu dem Treibmittelgehalt des das Granulat in der Transporteinrichtung und/oder des die Perlen in dem Vorschäumer umströmenden Abgases bestimmt wird. Bevorzugt wird das Zugas dem Vorschäumer und/oder dem Puffersilo in Abhängigkeit von den Meßsignalen für den Treibmittelgehalt gesteuert zugeführt. Für die Zwecke der Erfindung kann das Abgas Gas oder Zugas, z.B.

Temperiermedium, sein, das zumindest einen Teil des Granulats oder der Perlen in der Transporteinrichtung, in dem Vorschäumer oder in dem Puffersilo umströmt hat. Ein bevorzugtes Temperiermedium ist Dampf.

Ein Vorschäumer ist ein Behälter, in dem das Granulat erwärmt wird, insbesondere durch Kontakt mit einem Temperiermedium. In der bevorzugten Ausführung ist der Vorschäumer ein Druckvorschäumer, der einen Schäumbehälter aufweisen kann. Generell kann der Vorschäumer bzw. Druckvorschäumer eine Leitung mit einem Ventil aufweisen, mittels derer Abgas aus dem Vorschäumer bzw. Druckvorschäumer entnehmbar ist.

In dem erfindungsgemäßen Verfahren werden die vorgeschäumten Perlen in einer Form mittels Druck bei einer zweiten thermischen Behandlung zu Kunststoffformteilen geformt. Optional führt die zweite thermische Behandlung in der Form zu einer Volumenvergrößerung der Perlen, wenn diese einen Treibmittelgehalt aufweisen, der bei dem Druck und der Temperatur in der Form, die durch die zweite thermische Behandlung erreicht wird, zu einer Volumenvergrößerung führt, insbesondere dann, wenn die Form eine starre Form ist und ihr Volumen nicht variabel ist und beispielsweise verkleinert werden kann.

Optional erfolgt das Formen der Perlen mittels Druck zu einem Formteil aus expandiertem bzw. geschäumtem Kunststoff in einer Form bei gleichzeitiger Volumenverringerung der Form, was zur Verbindung der Perlen innerhalb der Form führt.

In einer Ausführungsform entfällt ein durch weiteres Verdampfen von Treibmittel verursachtes Aufschäumen der Perlen während der zweiten thermischen Behandlung innerhalb der Form. In dieser Ausführungsform weisen die in die Form eingebrachten Perlen einen Treibmittelgehalt auf, der bei der Temperatur in der Form nicht zu einer Volumenvergrößerung der Perlen führt. Die Temperatur in der Form, die durch die zweite thermische Behandlung erreicht wird, führt generell zum oberflächlichen Erweichen bzw. Plastifizieren der Perlen, das deren Verkleben miteinander erlaubt. Bevorzugt erfolgt die zweite thermische Behandlung mittels Dampf, z.B. Wasserdampf, vorzugsweise nach Einfüllen der Perlen in die Form, bevorzugt bei Umgebungsdruck. So können die in die Form gefüllten Perlen einen so geringen Treibmittelgehalt aufweisen oder frei von Treibmittel sein, dass bei der Temperatur in der Form kein weiteres Aufschäumen durch Treibmittel erfolgt, sondern lediglich ein Aufschäumen durch die Expansion des in den Perlen enthaltenen Gases, das kein Treibmittel umfasst und insbesondere Luft oder Stickstoff ist, z.B. zu zumindest 80 Vol.-%, bevorzugt zumindest 90 Vol.-%, bevorzugter zumindest 95 oder zumindest 98 Vol.-% des Porenvolumens bzw. Gasraums der Perlen. In dieser Ausführungsform weisen die Perlen in ihrem Gasraum bzw. ihren Poren neben einem geringen Anteil Treibmittel, das insbesondere gasförmig ist, Gas, z.B. Luft bzw. Stickstoff auf. Diese Luft kann z.B. durch Diffusion in die Perlen eingetreten sein und einen Teil des Treibmittels verdrängen.

In bevorzugter Ausführungsform weist das Verfahren den Schritt der Lagerung der Perlen nach deren Erzeugung durch Vorschäumen des treibmittelhaltigen Granulats auf, wobei während der Lagerung zumindest ein Anteil des Treibmittels gegen Luft oder ein anderes Gas, das kein Treibmittel ist, z.B. Stickstoff, ausgetauscht wird. Dazu werden die Perlen während der Lagerung mit Zugas umströmt, z.B. mit Luft bzw. Gas erhöhter Temperatur von z.B. 50 bis 70 °C, um den Austausch von Treibmittel gegen Zugas zu beschleunigen. Bevorzugt werden dabei der Volumenstrom und/oder die Temperatur des Zugases in Abhängigkeit von einem Meßsignal gesteuert, das von einem Detektor für den Treibmittelgehalt für das Abgas bestimmt wird, das das Granulat in der Transporteinrichtung umgibt und/oder die Perlen im Vorschäumer und/oder im Innenraum des Puffersilos umgibt.

Die Perlen, die bevorzugt nach dem Vorschäumen von Zugas umströmt werden, z.B. in einem Puffersilo, werden dabei optional durchmischt. Bei dieser Umströmung der Perlen wird in den Perlen enthaltenes Treibmittel zumindest anteilig, optional vollständig, von dem Zugas verdrängt.

Optional wird das Granulat, z.B. in einem Vorratsbehältnis, vor dem Vorschäumen von Zugas, insbesondere von Luft oder einem anderen Gas umströmt, wobei das Zugas Treibmittel aus dem Granulat entfernt.

Es hat sich gezeigt, dass durch den Austausch von zumindest einem Anteil Treibmittel der Perlen gegen Zugas das durch Formen der Perlen mittels Druck erhaltene Formteil nicht nachteilig beeinflusst wird. Insbesondere hat sich gezeigt, dass zumindest 50 %, bevorzugter zumindest 60 %, zumindest 70 %, zumindest 80 %, zumindest 90 % oder zumindest 95 %, und besonders bevorzugt etwa 60-70 % des nach dem Vorschäumen in den Perlen enthaltenen Treibmittels vor dem Formen mittels Druck in der Form gegen Zugas ausgetauscht werden kann.

Bevorzugt wird der Treibmittelgehalt der Perlen vor dem Formen in der Form, das optional mittels Druck erfolgt, der durch eine Volumenverringerung der Form erzeugt wird, auf einen vorbestimmten Treibmittelgehalt eingestellt, insbesondere dadurch, dass das Granulat während der optionalen Lagerung in einem Vorratsbehältnis vor Einbringung in die Transporteinrichtung und/oder die Perlen in dem Vorschäumer von Zugas umströmt werden, bis ein vorbestimmtes Meßsignal für den Treibmittelgehalt des Abgases bestimmt wird, das das Granulat bzw. die Perlen umströmt oder umströmt hat. Dazu wird der Treibmittelgehalt des Abgases, das das Granulat, z.B. im Vorratsbehältnis, und/oder die Perlen in dem Vorratsbehältnis oder im Pufferbehälter, in der Transporteinrichtung und/oder in dem Vorschäumer umströmt, mittels eines Detektors erfasst. Mittels einer Zugaszuführeinrichtung wird Zugas in den Innenraum des Vorschäumers und/oder in das Puffersilo geleitet, dessen Temperatur und/oder Volumenstrom in Abhängigkeit des Meßsignals für den Treibmittelgehalt gesteuert wird. Die Zugaszuführeinrichtung ist dabei insbesondere gesteuert, den Perlen bis zum Erreichen eines vorbestimmten Meßsignals für den Treibmittelgehalt des das Granulat bzw. die Perlen in dem Vorschäumer bzw. in dem Puffersilo umgebenden Abgases Zugas zuzuführen. Bei der Zuführung von Zugas, insbesondere von Dampf als Temperiermedium in den Vorschäumer mittels einer Zugaszuführeinrichtung wird bevorzugt die Temperatur, der Volumenstrom und/oder die Verweilzeit des Temperiermediums in dem Vorschäumer in Abhängigkeit vom Meßsignal für den Treibmittelgehalt im Abgas des Vorschäumers gesteuert. Als Abgas des Vorschäumers wird dabei Gas, insbesondere Dampf, mittels einer Leitung zu dem Detektor geführt.

Generell umfasst für die Zwecke der Erfindung Zugas keinen Anteil an Treibmittel.
Das Umströmen von Perlen kann alternativ oder zusätzlich zu dem Umströmen der Perlen in dem Vorschäumer auch in einem von Zugas durchströmten Puffersilo erfolgen, wobei Zugas in das Puffersilo eingeblasen, optional alternativ oder zusätzlich aus dem Puffersilo abgesaugt wird. Alternativ oder zusätzlich dazu, dass die Perlen während der Lagerung in dem Puffersilo mit Zugas, insbesondere Luft, erhöhter Temperatur umströmt werden, kann das Puffersilo auf die erhöhte Temperatur, z.B. auf eine Temperatur zwischen Raumtemperatur und 70 °C, erwärmt werden.

Zur Kontrolle des Gehalts von Perlen an Treibmittel, insbesondere während die Perlen von Zugas umströmt werden, weist das Verfahren bevorzugt zusätzlich zu der Bestimmung des Treibmittelgehalts des das Granulat in der Transporteinrichtung umgebenden Abgases und/oder des die Perlen umgebenden Abgases in dem Vorschäumer den Schritt des Bestimmens des Treibmittelgehalts des Abgases in dem Puffersilo auf, nachdem dieses zumindest einen Anteil der Perlen umströmt hat. Auf diese Weise erlaubt das Verfahren eine indirekte Bestimmung des Treibmittelgehalts der Perlen unmittelbar vor deren Einfüllen in die Form, ohne dass eine Unterbrechung des Verfahrens für die Dauer der Bestimmung des Treibmittelgehalts erforderlich ist.

Bevorzugt weist das Verfahren eine Steuerung auf Basis von Meßsignalen für den Treibmittelgehalt auf, z.B. die Steuerung des Volumenstroms und/oder der Temperatur des Zugases, mit dem die Perlen in dem Vorschäumer und/oder in dem Puffersilo umströmt werden, bevorzugt bis ein vorbestimmter Treibmittelgehalt des die Perlen umgebenden Abgases bestimmt wird. Auf diese Weise kann der Treibmittelgehalt der Perlen kontrolliert bzw. gesteuert auf einen vorbestimmten Gehalt eingestellt werden, z.B. bis ein vorbestimmter maximaler Treibmittelgehalt des Abgases erreicht wird, das die Perlen umströmt hat. Weiter bevorzugt werden die Perlen während des Durchströmens mit Zugas bewegt, z.B. gemischt und/oder umgeschichtet oder durch Schwingung bewegt, um einen gleichmäßigen Austausch von Treibmittel gegen Zugas zu erreichen. Dabei können die Perlen z.B. durch den Zugasstrom oder durch eine Mischeinrichtung gemischt werden.

In allen Ausführungsformen kann der Treibmittelgehalt des Abgases kontinuierlich bestimmt werden, z.B. durch kontinuierliches Zuführen des Abgases zu einem Detektor einer Meßeinrichtung, der z.B. ein Flammenionisationsdetektor (FID) oder ein Wärmeleitfähigkeitsdetektor (WLD) ist, wie er für Gaschromatographen bekannt ist, oder ein optischer Detektor, z.B. mit einer für das Treibmittel gegenüber Luft spezifischen Messwellenlänge sein kann. Denn das Treibmittel, z.B. Pentan, muss für die Messung nicht von der Luft oder anderen aus den Perlen ausgetretenen Bestandteilen abgetrennt werden. Entsprechend kann die Meßeinrichtung ohne Trenneinrichtung für Treibmittel von Luft bzw. Gas sein, bzw. aus einem Detektor bestehen.

Ein Vorteil der erfindungsgemäßen Bestimmung des Treibmittelgehalts in dem Abgas, bzw. der optionalen Steuerung des Verfahrens in Abhängigkeit von dem in dem Abgas bestimmten Treibmittelgehalt liegt darin, dass eine Entnahme von Perlen bzw. Granulat während des Verfahrens nicht notwendigerweise erfolgt und das Verfahren unmittelbar abhängig von der Bestimmung des Treibmittelgehalts des Abgases gesteuert werden kann und der so bestimmte Treibmittelgehalt ein Maß für den aktuellen Treibmittelgehalt der Perlen bzw. des Granulats bildet. Es hat sich gezeigt, dass das Austreten von Treibmittel aus Granulat bzw. aus den Perlen bei erhöhter Temperatur so schnell ablaufen kann, dass die Messung des Treibmittelgehalts in entnommenem Granulat bzw. Perlen zu langsam ist, um bei Fortlaufen des Verfahrens den nach der Dauer der Messung erreichten aktuellen Treibmittelgehalt des Granulats bzw. der Perlen wiederzugeben.

Generell kann die vorzugsweise kontinuierliche Bestimmung des Treibmittelgehalts ohne jede Unterbrechung laufen oder mit Unterbrechungen, insbesondere periodisch mit gesteuerten Unterbrechungen, in denen bevorzugt der Detektor mit Gas, z.B. mit einem Kalibriergas, das einen definierten Treibmittelgehalt aufweist und auf einen definierten Treibmittelgehalt bzw. mit Luft gespült wird und z.B. auf Null gesetzt wird.

Bevorzugt ist der vorbestimmte Treibmittelgehalt von Abgas zuvor als der Treibmittelgehalt bestimmt worden, der sich bei dem vorbestimmten Resttreibmittelgehalt der Perlen und bei dem Druck und der Temperatur des Volumenstroms des Zugases einstellt, mit dem die Perlen umströmt werden.

Weiter bevorzugt weist das Verfahren den Schritt des kontinuierlichen Bestimmens des Gehalts an Treibmittel in dem Abgas auf, das in dem Vorschäumer vorliegt. Bevorzugter wird das Vorschäumen abhängig von dem kontinuierlich bestimmten Treibmittelgehalt gesteuert, der bestimmt wurde, z.B. durch Steuern des Drucks, der Temperatur und/oder der Dauer des Vorschäumens und/oder des Volumenstroms von Zugas, z.B. von Temperiermedium, das in den Vorschäumer geleitet wird.

Wegen des Austauschs von zumindest einem Anteil des in den Perlen enthaltenen Treibmittels gegen Zugas, insbesondere bis auf einen vorbestimmten Treibmittelgehalt bzw. bis zur Bestimmung eines vorbestimmten Treibmittelgehalts vor dem Formen, zeichnet sich das Verfahren durch eine kurze Lagerdauer für die geschäumten Kunststoffformteile oder keine Lagerung der geschäumten Kunststoffformteile zur Verringerung des Treibmittelgehalts durch Ausgasen im Anschluss an das Formen aus. Beispielsweise werden durch ein erfindungsgemäßes Verfahren hergestellte geschäumte Kunststoffformteile in Abhängigkeit ihrer Schüttdichte sowie in Abhängigkeit der Lagertemperatur für 4 - 48 Stunden, bevorzugt bis 24 Stunden gelagert, z.B. bei Raumtemperatur für 1-2 Tage.

Weiter kann das Verfahren vor dem Vorschäumen des Granulats zu Perlen einen oder mehrere Schritte zur Verringerung des Treibmittelgehalts des Granulats und/oder einen oder mehrere Schritte zur Verringerung des Treibmittelgehalts der vorgeschäumten Perlen aufweisen. Denn das erfindungsgemäße Verfahren kommt optional ohne eine durch Treibmittel in den vorgeschäumten Perlen bewirkte weitere Aufschäumung in der Form aus, so dass optional der Treibmittelgehalt in den vorgeschäumten Perlen, die in die Form gefüllt werden, so niedrig ist, dass bei der Temperatur der zweiten thermischen Behandlung während der Formung bzw. des Pressens keine signifikante Expansion der Perlen auftritt und lediglich das in den Perlen enthaltene Gas bzw. die in den Perlen enthaltene Luft zu einer Expansion führt. Als Schritt zur Verringerung des Treibmittelgehalts von Granulat oder Perlen werden diese mit Zugas, das z.B. Luft und/oder Temperiermittel sein kann, umströmt, bis im Abgas ein vorbestimmter Treibmittelgehalt bestimmt wird.

Die mit dem Verfahren hergestellten Kunststoffformteile zeichnen sich dadurch aus, dass sie unmittelbar nach der Formung einen geringen Treibmittelgehalt aufweisen. Da ein Ausdampfen von Treibmittel aus den Kunststoffformteilen während einer an die Formung anschließenden im Vergleich zu herkömmlichen Verfahren kürzeren Lagerung bzw. nicht erfolgt, weisen die erfindungsgemäß hergestellten Kunststoffformteile eine geringere, bevorzugt keine Schwindung auf. Die Schwindung wird als Verringerung der Abmessungen der Kunststoffformteile in zumindest einer Dimension zwischen der Formung und einer vorbestimmten Lagerdauer bestimmt, z.B. während einer Lagerdauer von 1 bis 40 Tagen und insbesondere von 10 bis 30 Tagen bei 20 °C.

Bevorzugt wird das Granulat beim erfindungsgemäßen Verfahren durch die erste thermische Behandlung zu Perlen mit im Vergleich zum Ausgangsgehalt an Treibmittel im Granulat verringertem Treibmittelgehalt oder zu treibmittelfreien Perlen vorgeschäumt, zum Beispiel bis zum Erreichen einer gewünschten Schüttdichte, z.B. einer Schüttdichte von 10 bis 30 kg/m³, insbesondere einer Schüttdichte von 13 bis 22 kg/m³ und/ oder bis zum Erreichen von zumindest 90 % der bei der Temperatur und dem Druck der ersten thermischen Behandlung maximal erreichbaren Volumenexpansion des Granulats.

Optional sind Druck und Temperatur der ersten thermischen Behandlung eingestellt, dass die durch das Vorschäumen erhaltenen Perlen einen Gehalt an Treibmittel aufweisen, der bei Normaldruck und einer Temperatur zwischen Raumtemperatur und der Temperatur der ersten thermischen Behandlung oder der Temperatur liegt, die in der Form bei der zweiten thermischen Behandlung eingestellt wird, insbesondere bei Normaldruck und der Temperatur der zweiten thermischen Behandlung, keine weitere Expansion bewirkt. Bevorzugt weisen die durch das Vorschäumen erhaltenen Perlen einen Gehalt an Treibmittel auf, der bei Normaldruck und der Temperatur, die in der Form während des Formens mittels Druck eingestellt wird, zu keinem weiteren Aufschäumen der Perlen infolge einer Verdampfung von Treibmittel, z.B. während der zweiten thermischen Behandlung, führt, sondern z.B. nur eine Expansion der in den Perlen befindlichen Luft bzw. des in den Perlen enthaltenen gasförmigen Treibmittels bewirkt.

Das nach der ersten thermischen Behandlung in den Perlen noch enthaltene Treibmittel reicht daher in dieser Ausführungsform des Verfahrens nicht aus, um die Perlen in einer starren Form z.B. allein durch eine zweite thermische Behandlung miteinander zu einem Formteil aus expandiertem Kunststoff zu verpressen. Bevorzugt erfolgt daher der Schritt des Formens der Perlen mittels Druck durch Volumenverringerung einer Form, deren Volumen variabel ist, z.B. indem eine oder zwei Wände der Form verschoben werden, wobei die Volumenverringerung vorzugsweise 10 bis 40 %, insbesondere 10 bis 20 % des Volumens der Form beträgt. Die vorgeschäumten Perlen mit verringertem Treibmittelgehalt werden in dieser Ausführungsform mittels Druck, nämlich durch Volumenverringerung der Form, z.B. durch Verschiebung einer Wand in Richtung der gegenüberliegenden Wand, zu einem Formteil aus expandiertem Kunststoff geformt.

Das in einem erfindungsgemäßen Verfahren zur Herstellung der treibmittelarmen Kunststoffformteile verwendete und bereitgestellte Granulat aus expandierbarem Kunststoff ist bevorzugt aus der Gruppe ausgewählt, die expandierbares Polystyrol, expandierbares Polyethylen, expandierbares Polypropylen und Mischungen dieser umfasst, wobei das Granulat jeweils einen Ausgangsgehalt an Treibmittel aufweist. Der Ausgangsgehalt an Treibmittel beträgt insbesondere bis zu 10 Gew.-% des Granulats und bevorzugt etwa 4 bis 7 Gew.-%.

Die erfindungsgemäße Bestimmung des Treibmittelgehalts erlaubt eine Überwachung des Verfahrens und damit eine Steuerung bzw. Regelung der Erzeugung von Perlen und daraus herstellten Kunststoffformteilen mit vorbestimmtem Treibmittelgehalt. Dabei erlaubt die Bestimmung des Treibmittelgehalts dessen Reduktion in den Perlen bzw. in dem daraus geformten Kunststoffformteil bis auf einen minimalen Gehalt, der z.B. für eine Expansion durch die zweite thermische Behandlung noch erforderlich ist.

In einer weniger bevorzugten Ausführungsform des erfindungsgemäßen Verfahrens ist den Perlen vor dem Einfüllen in die Form ein Anteil Regenerat zugemischt, wobei der Anteil an Regenerat z.B. maximal bis zu 50 Gew.-% und insbesondere etwa 5 bis 25 Gew.-% beträgt. Regenerat sind Partikel von Kunststoffschaum, insbesondere expandiertes Polystyrol, bevorzugt aus rezykliertem expandiertem Polystyrol durch Zerkleinern erzeugte perlenförmige oder unregelmäßige Partikel.

Als Treibmittel enthält das in einem erfindungsgemäßen Verfahren verwendete und bereitgestellte Granulat aus expandierbarem Kunststoff z.B. Pentan, Hexan, Heptan oder Octan, wobei Pentan, das n-Pentan, iso-Pentan oder ein Gemisch dieser ist, besonders bevorzugt ist.

Die für das Verfahren verwendbare Vorrichtung weist eine Transporteinrichtung für das Granulat auf, z.B. eine Förderschnecke. In einer bevorzugten Ausführungsform weist die Transporteinrichtung für Granulat einen Detektor für den Treibmittelgehalt in Abgas auf, das zumindest einen Anteil des Granulats umströmt hat, wobei der Detektor mittels einer Leitung mit dem Innenraum der Transporteinrichtung verbunden ist. Die Leitung, mittels derer der Detektor mit der Transporteinrichtung verbunden ist, ist bevorzugt beheizbar, um die Kondensation des Abgases zu verhindern, insbesondere wenn dies im Wesentlichen aus Dampf mit Treibmittel besteht. Die beheizbare Leitung kann einen dampfbeheizten Doppelmantel aufweisen. Vorzugsweise wird die treibmittelhaltige Luft, die das Granulat umgibt, vor oder bei Eintritt des Granulats in die Transporteinrichtung abgesaugt, sodass nur das während des Transports in der Transporteinrichtung aus dem Granulat entweichende Treibmittel vom Detektor erfasst wird.

Weiter bevorzugt weist die Transporteinrichtung eine Temperiereinrichtung auf, die insbesondere in Abhängigkeit vom Signal des Detektors für den Treibmittelgehalt in dem Abgas, das das Granulat umströmt, gesteuert ist. Bevorzugt ist die Steuerung der Temperiereinrichtung eingerichtet, die Transporteinrichtung mittels der Temperiereinrichtung zu beheizen, bis ein vorbestimmter Treibmittelgehalt vom Detektor in dem Abgas bestimmt wird. Auf diese Weise ist die Transporteinrichtung für Granulat eingerichtet, den Treibmittelgehalt des Granulats auf den Wert einzustellen, der für das Vorschäumen erforderlich ist, während der darüber hinaus gehende Treibmittelgehalt ausgetragen werden kann.

In Ausführungsformen, in denen die Transporteinrichtung eine Temperiereinrichtung aufweist, weist die Temperiereinrichtung bevorzugt zumindest ein Heizelement auf, mittels dessen das Granulat auf eine Temperatur oberhalb der Raumtemperatur, z.B. auf eine Temperatur von bis zu 70 °C, insbesondere auf eine Temperatur von 30 bis 60 °C erwärmt werden kann. Optional ist das zumindest eine Heizelement beheizt und die Transporteinrichtung mit Temperiereinrichtung kann beispielsweise eine beheizbare Fördereinrichtung, z.B. eine beheizbare Förderschnecke oder ein beheizbares Förderband sein.

Zur Bestimmung des Treibmittelgehalts des Granulats in der Transporteinrichtung wird der Treibmittelgehalt in dem aus der Transporteinrichtung abgeführten Abgas gemessen, vorzugsweise mittels eines Detektors mit FID (Flammenionisationsdetektor) oder WLD (Wärmeleitfähigkeitsdetektor). Aus dem in dem Abgas gemessenen Treibmittelgehalt kann der Treibmittelgehalt in dem Granulat berechnet werden, z.B. von einer mit dem Detektor gekoppelten Steuerungseinheit, die eingerichtet ist, unter Differenzbildung des bei der Eingangskontrolle ermittelten Gehalts an Treibmittel und des in dem Abgas aus der Transporteinrichtung bestimmten Gehalts an Treibmittel anhand eines vorbestimmten Verhältnisses von Treibmittel in der Abluft und dem Ausgangsgehalt an Treibmittel des Granulats den Treibmittelgehalt des Granulats in der Transporteinrichtung zu ermitteln.

Das Granulat aus expandierbarem Kunststoff, das einen Ausgangsgehalt an Treibmittel aufweist, wird im erfindungsgemäßen Verfahren zum Vorschäumen in einen mit Dampf beaufschlagten Vorschäumer eingebracht. Bevorzugt weist das in den Vorschäumer eingebrachte Granulat dabei einen z.B. mittels der Transporteinrichtung für Granulat eingestellten Gehalt an Treibmittel auf.

Der Vorschäumer ist bevorzugt ein diskontinuierlicher Vorschäumer, der auch als Druckvorschäumer bezeichnet wird, oder alternativ ein kontinuierlicher Vorschäumer. Der weniger bevorzugte kontinuierliche Vorschäumer umfasst einen nicht geschlossenen Schäumbehälter, der vorzugsweise mit der Transporteinrichtung für Granulat verbunden ist, die eingerichtet ist, kontinuierlich Granulat in den Schäumbehälter zu transportieren. Der Schäumbehälter ist mit einer Zugaszuführeinrichtung verbunden, die eingerichtet ist, in dem Vorschäumer befindliches Granulat, vorzugsweise kontinuierlich, mit Zugas, insbesondere mit Temperiermedium, z.B. Dampf, zu beaufschlagen. Weiterhin weist der Schäumbehälter einen Überlauf für kontinuierlich aus dem Schäumbehälter übertretendes Temperiermedium und/oder Perlen auf.

Der Druckvorschäumer weist einen verschließbaren Schäumbehälter auf, der mit der Transporteinrichtung für Granulat verbunden ist, die zum Transport von Granulat in den Schäumbehälter eingerichtet ist. Der Druckvorschäumer ist mit einer Zugaszuführeinrichtung verbunden, die zur vorzugsweise kontinuierlichen Beaufschlagung von in dem Vorschäumer befindlichem Granulat mit Zugas, insbesondere mit Temperiermedium, eingerichtet ist. Mittels einer Leitung ist der Druckvorschäumer mit dem Detektor verbunden. Die Leitung, mittels derer der Detektor mit dem Vorschäumer verbunden ist, ist bevorzugt beheizbar, um die Kondensation des Abgases zu verhindern, insbesondere wenn dies im Wesentlichen aus Dampf mit Treibmittel besteht. Die beheizbare Leitung kann einen dampfbeheizten Doppelmantel aufweisen.

Erfindungsgemäß wird das Granulat in einem kontinuierlichen Vorschäumer oder bevorzugt in einem diskontinuierlichen Druckvorschäumer zu Perlen mit gegenüber dem Ausgangsgehalt an Treibmittel in dem Granulat verringertem Treibmittelgehalt vorgeschäumt. Das Vorschäumen erfolgt dabei durch eine erste thermische Behandlung bei einem Vorschäumdruck, beispielsweise durch Erwärmung des Granulats bis mindestens auf die Verdampfungstemperatur des in dem Granulat enthaltenen Treibmittels bei dem Vorschäumdruck. Insbesondere erfolgt die erste thermische Behandlung durch Zuführung von heißem Temperiermedium in den Vorschäumer, z.B. von Dampf einer Temperatur zwischen 75 °C und 100 °C, insbesondere mit einer Temperatur zwischen 85 °C und 95 °C, z.B. 90 °C, vorzugsweise unter Rühren des Granulats. Infolge der Temperatur in dem Vorschäumer während der ersten thermischen Behandlung verdampft zumindest ein Anteil des in dem Granulat enthaltenen Treibmittels entsprechend seines Dampfdruckverhaltens, wodurch das Granulat zu Perlen expandiert. Bevorzugt wird das Granulat während der ersten thermischen Behandlung bis zum Erreichen von zumindest 90 %, insbesondere von 90 bis 100 % der bei dem Vorschäumdruck und der Vorschäumtemperatur maximal erreichbaren Volumenexpansion und/oder bis zum Erreichen einer gewünschten Schüttdichte, z.B. einer Schüttdichte von 8 bis 30 kg/m³, insbesondere einer Schüttdichte von 11 bis 25 kg/m³ und bevorzugt einer Schüttdichte von 14 bis 22 kg/m³ vorgeschäumt.

Der Vorschäumer weist vorzugsweise einen Detektor für den Treibmittelgehalt auf, der mittels einer Leitung mit dem Vorschäumer verbunden ist und dem kontinuierlich oder satzweise Abgas aus dem Vorschäumer zugeführt wird. Die Leitung ist vorzugsweise beheizbar, z.B. auf eine Temperatur zwischen Raumtemperatur und der Vorschäumtemperatur oder auf die Vorschäumtemperatur, wodurch eine Kondensation des Abgases in der Leitung verhindert wird. Die Zugaszuführeinrichtung des Vorschäumers, die zur Zuführung von Zugas, insbesondere von Temperiermedium, z.B. Dampf, und/oder Luft, Stickstoff, Kohlenstoffoxid oder Mischungen dieser eingerichtet ist, ist bevorzugt in Abhängigkeit von dem Meßsignal für den in dem Abgas bestimmten Treibmittelgehalt gesteuert. Dabei kann die Steuerungseinheit eingerichtet sein, die Heizung und/oder Zugaszuführeinrichtung des Vorschäumers zu steuern, bis ein vorbestimmtes Meßsignal für den Treibmittelgehalt vom Detektor bestimmt ist.

In einer Ausführungsform ist der Vorschäumer eingerichtet, den Vorschäumdruck und/oder die Vorschäumtemperatur während der ersten thermischen Behandlung einzustellen. Insbesondere kann der Vorschäumer eingerichtet sein, die Vorschäumtemperatur während der ersten thermischen Behandlung auf eine Temperatur unterhalb der Verdampfungstemperatur des in dem Granulat enthaltenen Treibmittels bei Normaldruck zu verringern. In dieser Ausführungsform ist der Vorschäumer eingerichtet, einen Unterdruck bzw. Vakuum anzulegen, so dass die Verdampfung des in dem Granulat enthaltenen Treibmittels bei niedrigerer Vorschäumtemperatur erfolgt. Dadurch wird der äußere Druck auf die Perlen reduziert und das Ausdiffundieren des Treibmittels unterstützt, ebenso verdampft infolge der Dampfzuführung in den Vorschäumer an den Perlen anhaftendes Kondensat zumindest teilweise.

Generell bevorzugt wird die Volumenexpansion des Granulats während der ersten thermischen Behandlung in einem erfindungsgemäßen Verfahren mittels im Vorschäumer angeordneter Sensoren, die die Füllhöhe in dem Vorschäumer anzeigen, bestimmt.

Nach der ersten thermischen Behandlung werden die vorgeschäumten Perlen, die einen mittels des Detektors bestimmten, insbesondere einen vorbestimmten Treibmittelgehalt aufweisen, z.B. noch einen geringen Gehalt an Treibmittel aufweisen oder gar kein Treibmittel mehr aufweisen, aus dem Vorschäumer entnommen. Dazu werden die Perlen aus dem Vorschäumer mittels einer Fördereinrichtung, die insbesondere beheizbar und/oder belüftet ist, bevorzugt in ein Puffersilo überführt, in dem sie zwischengelagert werden, bevor sie in die Form gefüllt und mittels Druck bei einer zweiten thermischen Behandlung geformt werden. Die Fördereinrichtung ist beispielsweise ein mit warmer Luft beaufschlagter Fließbetttrockner, in dem sich eine Wirbelschicht ausbildet, ein mit Warmluft betriebenes Fördergebläse oder alternativ ein Vakuumtrockner. Bevorzugt werden die Perlen auf der Fördereinrichtung von anhaftendem Temperiermedium getrocknet, beispielsweise durch Zuführung von warmer Luft oder Anlegen von Unterdruck.

Optional wird ein Teil der vorgeschäumten Perlen zwecks Kontrolle des Treibmittelgehalts bzw. zur Ermittlung der Schüttdichte in eine Wiegevorrichtung überführt, um den aus dem die Perlen in dem Vorschäumer umströmenden Abgas ermittelten Treibmittelgehalt zu überprüfen. Bei einer Abweichung des auf diese Weise ermittelten Treibmittelgehaltes der Perlen von dem in der Wiegevorrichtung tatsächlich ermittelten Treibmittelgehalt der Perlen weist das Verfahren bevorzugt einen Schritt der Nachsteuerung des Vorschäumers auf, z.B. indem ein Korrekturfaktor, der der Quotient des Treibmittelgehalts, der aus dem die Perlen in dem Vorschäumer umströmenden Abgas ermittelt wird, und dem tatsächlich ermittelten Treibmittelgehalt ist. Der Korrekturfaktor wird mit dem aus dem die Perlen in dem Vorschäumer umströmenden Abgas ermittelten Wert multipliziert und der Volumenstrom und/oder die Temperatur des dem Vorschäumer zugeführten Zugases wird in Abhängigkeit von dem mit dem Korrekturfaktor multiplizierten Meßsignal gesteuert, das von dem Detektor für den Treibmittelgehalt des die Perlen in dem Vorschäumer umströmenden Abgases bestimmt wird.

In einer Ausführungsform, in der das erfindungsgemäße Verfahren zur Herstellung treibmittelarmer Kunststoffformteile nach der Entnahme der Perlen aus dem Vorschäumer einen Schritt der Zwischenlagerung der Perlen in einem Puffersilo aufweist, gleichen die vorgeschäumten Perlen während der Zwischenlagerung den durch die erste thermische Behandlung sowie durch Abkühlung nach dem Vorschäumen entstandenen inneren Unterdruck dadurch aus, dass Umgebungsluft in die Perlen hineindiffundiert. Dabei wird während der Zwischenlagerung der Gehalt an Treibmittel der vorgeschäumten Perlen mit zunehmender Lagerdauer durch Entweichung von Treibmittel reduziert. Zur Beschleunigung der Entweichung von Treibmittel aus den Perlen ist das Puffersilo vorzugsweise belüftet und/oder beheizt, z.B. auf eine Temperatur zwischen Raumtemperatur und etwa 70°C. Die optionale Belüftung des Puffersilos erfolgt insbesondere mittels einer Zugaszuführeinrichtung, die eingerichtet ist, das Puffersilo kontinuierlich oder satzweise mit Zugas, insbesondere Luft, zu durchströmen. Zusätzlich zu der Zugaszuführeinrichtung weist das Puffersilo bevorzugt einen Detektor für den Treibmittelgehalt des die Perlen umströmenden Abgases innerhalb des Puffersilos oder für den Treibmittelgehalt des Abgases, das mittels einer Leitung aus dem Puffersilo austritt, auf. Weiter bevorzugt weist das Puffersilo eine Mischeinrichtung auf. Wie mit Bezug auf den Vorschäumer beschrieben ist, weist das Puffersilo bevorzugt eine in Abhängigkeit von dem Meßsignal seines Detektors gesteuerte Zugaszuführeinrichtung auf.

Generell bevorzugt ist eine Leitung zwischen der Transporteinrichtung, dem Vorschäumer oder einem Puffersilo einerseits und dem Detektor andererseits vorzugsweise temperierbar und/oder isoliert. Diese optionale Temperierung der Leitung, die Abgas zu einem Detektor führt, kann temperaturbedingte Meßsignaländerungen vermeiden. Insbesondere in einer Ausführungsform, in der die Messeinrichtung keine Trenneinrichtung, z.B. keine Trennsäule, für Abgas vor dem Detektor aufweist bzw. aus einem Detektor besteht, ist die Leitung temperiert. In dieser Ausführung kann das Signal die Signalhöhe sein bzw. aus der Signalhöhe bestehen. Wenn die Leitung zum Detektor nicht temperiert ist, ist es bevorzugt, wenn die Messeinrichtung eingerichtet ist, für ein vorbestimmtes Volumen Abgas den Treibmittelgehalt zu bestimmen, z.B. mittels einer Volumenmesseinrichtung oder durch eine Dosierungseinrichtung, die ein vorbestimmtes Volumen Abgas bei einer vorbestimmten Temperatur abmisst, insbesondere eine temperierte Probenschleife.

Die Vorrichtung kann optional nur einen Detektor aufweisen, der mittels einer Ventilanordnung, die zum Beispiel ein oder mehrere Mehrwegeventile und/oder mehrere Ventile umfasst, und daran angeschlossener Leitungen mit dem Vorschäumer, dem Puffersilo und/oder der Transporteinrichtung verbunden ist. Eine Ventilsteuerung ist eingerichtet, den Detektor mittels der Ventilanordnung mit jeweils einem von Vorschäumer, dem Puffersilo und/oder der Transporteinrichtung zu verbinden.

Im Anschluss an das Vorschäumen des Granulats sowie die optionale Zwischenlagerung der vorgeschäumten Perlen im Puffersilo werden die vorgeschäumten Perlen in eine Form gegeben, in der die Perlen zu einem Formteil aus expandiertem Kunststoff verpresst werden. Die in die Form gegebenen vorgeschäumten Perlen weisen vorzugsweise einen geringen Treibmittelgehalt, kein Treibmittel oder so wenig Treibmittel auf, dass sie allein durch eine zweite thermische Behandlung nicht ausreichend stark expandieren, um in einer Form mit unveränderlichem Volumen zu verkleben.

Daher weist die Vorrichtung für die Formung der Perlen mittels Druck bevorzugt eine Form auf, die zur Volumenverringerung während der Formung bzw. während der zweiten thermischen Behandlung eingerichtet ist. Für die Volumenverringerung kann die Form zumindest eine bewegliche Wand aufweisen, die nach dem Einfüllen der Perlen in die Form in Richtung einer gegenüberliegenden Wand verschoben wird. Beispielsweise können zwei Wände der Form, insbesondere zwei gegenüberliegende Wände beweglich sein, sodass durch Relativbewegung dieser Wände zueinander das Volumen der Form verringert wird. Die Form kann eingerichtet sein, ihr Volumen durch Verschiebung zumindest einer Wand in Richtung der gegenüberliegenden Wand um mindestens 10 %, insbesondere um 20 bis 40 % und bevorzugt um 30 bis 40 % zu verringern. In dieser Ausführungsform wird das in den Perlen optional noch enthaltene Treibmittel durch die zweite thermische Behandlung aktiviert und zumindest anteilig verdampft und in den Perlen enthaltene Luft kann sich ausdehnen. Durch die gleichzeitige Volumenverringerung der Form verpressen die Perlen miteinander zu einem Formteil.

In einer weniger bevorzugten Ausführungsform erfolgt die Formung der Perlen in einer starren Form. Die in die Form gegebenen Perlen weisen in dieser Ausführungsform einen Gehalt an Treibmittel auf, der ausreichend groß ist, dass die Perlen während der zweiten thermischen Behandlung in der Form infolge der zumindest anteiligen Treibmittelverdampfung und der daraus resultierenden Volumenexpansion der Perlen zu einem Formteil verkleben.

Optional erfolgt das Formen der Perlen zu einem Kunststoffformteil während einer zweiten thermischen Behandlung, z.B. durch Erwärmen der Form, insbesondere auf eine Temperatur oberhalb der Verdampfungstemperatur des etwaigen noch enthaltenen Treibmittels bei dem Druck in der Form. Das Formen der Perlen in der Form erfolgt beispielsweise unter Zuführung von heißem Temperiermedium, z.B. von Dampf.

Durch das erfindungsgemäße Verfahren werden Kunststoffformteile erhalten, die einen im Vergleich zu herkömmlich hergestellten Kunststoffformteilen verringerten Treibmittelgehalt aufweisen. Die Lagerung erfindungsgemäß hergestellten Formteile im Anschluss an ihre Herstellung kann daher für eine im Vergleich zu herkömmlich hergestellten Formteilen deutlich reduzierte Lagerdauer erfolgen, innerhalb derer die erfindungsgemäß hergestellten Formteile aus expandiertem Kunststoff optional weiter auf einen Resttreibmittelgehalt ausgasen, der bei herkömmlich hergestellten Formteilen erst nach einer entsprechend längeren Lagerzeit erreicht wird.

### Genaue Beschreibung der Erfindung

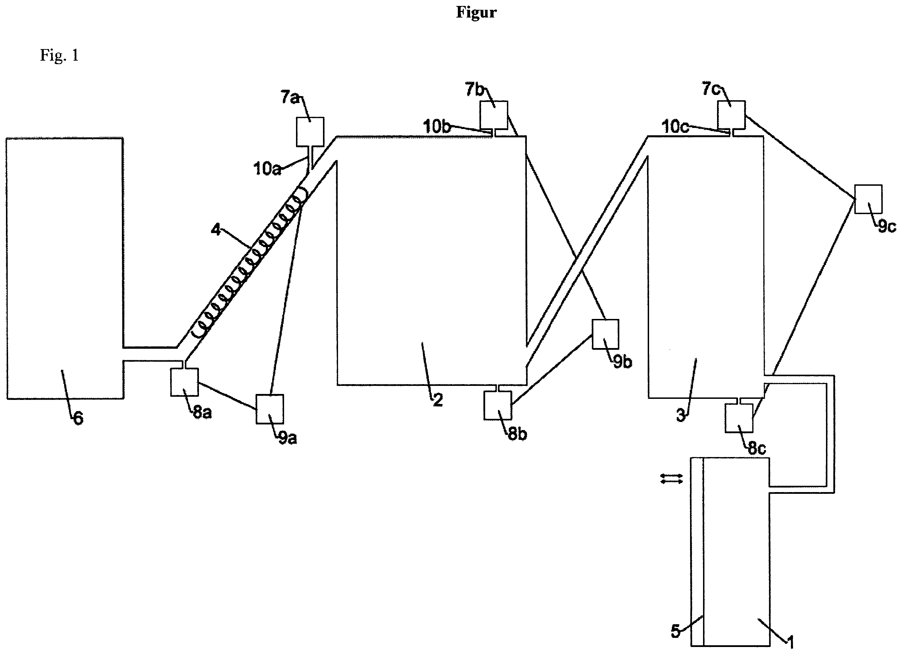

Die Erfindung wird nun genauer anhand von Beispielen und mit Bezug auf die Figur 1 beschrieben, die schematisch eine erfindungsgemäße Vorrichtung zur Herstellung von Kunststoffformteilen zeigt.

### Beispiel 1: Herstellung treibmittelarmer Kunststoffformteile

Für die Herstellung treibmittelarmer Kunststoffformteile mittels der in Figur 1 gezeigten Vorrichtung wurde Granulat aus expandierbarem Polystyrol mit einem Ausgangsgehalt an Pentan in einem Vorratsbehältnis 6 bereitgestellt. Der Gehalt an Pentan wurde gaschromatographisch zu 6,0 Gew.-% ermittelt. Das Granulat wurde unmittelbar im Anschluss an die Bestimmung des Pentangehalts mittels einer Transporteinrichtung 4 in einen Druckvorschäumer 2 transportiert. Als Transporteinrichtung 4 wurde eine Förderschnecke mit Temperiereinrichtung 8a verwendet, die z.B. ein beheizter Doppelmantel ist. Mittels eines über eine temperierte Leitung 10a mit dem Innenraum der Förderschnecke verbundenen Detektors 7a wurde der Treibmittelgehalt in dem Abgas, das das Granulat während des Transportierens in der Förderschnecke umströmt, kontinuierlich bestimmt. Die Temperatur der Temperiereinrichtung 8a, ein Doppelmantel der Förderschnecke, wurde abhängig von der kontinuierlichen Bestimmung des Treibmittelgehalts und unter Berücksichtigung der Fördergeschwindigkeit der Förderschnecke von einer über eine Steuerleitung mit der Temperiereinrichtung 8a verbundenen Steuerung 9a gesteuert.

Nach der Eingabe des Granulats in den Vorschäumer 2 wurde der Vorschäumer mit heißem Dampf gespült, der mittels einer Zugaszuführeinrichtung 8b in den Vorschäumer 2 eintreten gelassen wurde. Durch die Spülung wurde in dem Vorschäumer 2 befindliche Luft von Dampf verdrängt, wobei die von dem Dampf verdrängte Luft durch ein geöffnetes Abdampfventil des Vorschäumers 2 austreten gelassen wurde. Nach der Verdrängung der Luft aus dem Vorschäumer 2 durch Dampf wurde das Abdampfventil teilweise geschlossen, z.B. auf etwa 20 - 30 % seines maximalen Durchlasses. Mittels der Zugaszuführeinrichtung 8b wurde der Vorschäumer durch Zuführung von heißem Dampf in einer ersten thermischen Behandlung auf eine Temperatur von 90 °C erwärmt, wobei die Zuführung des Dampfs unter Rühren des Granulats erfolgte. Die Volumenexpansion des Granulats wurde dabei mittels im Vorschäumer 2 angeordneter Sensoren, die die Füllhöhe in dem Vorschäumer 2 anzeigen, bestimmt. Weiterhin wurde der Treibmittelgehalt des Abgases, das die Perlen während des Vorschäumens umströmt, mittels eines über eine temperierte Leitung 10b mit dem Vorschäumer 2 verbundenen Detektors 7b kontinuierlich bestimmt. Aus dem Treibmittelgehalt in dem Abgas wurde indirekt der Treibmittelgehalt der Perlen in dem Vorschäumer 2 ermittelt. Mittels einer mit der Zugaszuführeinrichtung 8b über eine Steuerleitung verbundenen Steuerung 9b wurde der Volumenstrom, die Temperatur und/oder die Verweilzeit des dem Vorschäumer 2 zugeführten Dampfes in Abhängigkeit des mittels des Detektors 7b in dem Abgas ermittelten Treibmittelgehaltes gesteuert. Bei Erreichen eines vorbestimmten Treibmittelgehalts wurde der Vorschäumprozess abgebrochen und die Perlen wurden mittels einer beheizten und mit warmer Luft belüfteten Fördereinrichtung aus dem Vorschäumer 2 in ein Puffersilo 3 überführt.

In dem Puffersilo 3 wurden die vorgeschäumten Perlen für die Dauer von 2 Tagen gelagert. Während der Lagerung der Perlen in dem Puffersilo 3 wurde dieses kontinuierlich mittels einer Zugaszuführeinrichtung 8c mit 45 °C warmer Luft belüftet. Das während der Lagerung aus den vorgeschäumten Perlen entweichende Pentan wurde mit dem Abgas aus dem Puffersilo 3 entfernt, wobei der Pentangehalt in dem Abgas zur Ermittlung des noch in den Perlen enthaltenen Pentangehalts mittels eines über eine temperierte Leitung 10c mit dem Puffersilo verbundenen Detektors 7c erfasst wurde. Der Volumenstrom und die Temperatur der dem Puffersilo von der Luftzuführeinrichtung 8c zugeführten Luft wurde von einer über eine Steuerleitung mit der Zugaszuführeinrichtung 8c verbundenen Steuerung 9c in Abhängigkeit des mittels des Detektors 7c ermittelten Treibmittelgehaltes gesteuert.

Aus dem Puffersilo 3 wurden die vorgeschäumten Perlen in eine Form 1 überführt, die eine verschiebliche Wand 5 aufwies. Nach Verschließen der Form 1 wurde dieser 110-115 °C heißer Wasserdampf zugeführt und die verschiebliche Wand 5 wurde in Richtung der gegenüberliegenden Wand verschoben, wobei die Volumenverringerung der Form 1 etwa 15 % betrug. Infolge dieser zweiten thermischen Behandlung bei gleichzeitiger Volumenverringerung der Form 1 wurden die Perlen zu einem Formteil aus expandiertem Polystyrol verpresst.

### Beispiel 2: Flammtest

Aus dem nach Beispiel 1 erfindungsgemäß hergestellten Formteil aus expandiertem Polystyrol wurde ein Probestück mit den Maßen 20 cm x 20 cm x 2 cm ausgeschnitten. Zum Vergleich wurde ein erstes Vergleichsstück mit identischen Maßen aus einem herkömmlich hergestellten Polystyrol-Formteil, d.h. aus einem Formteil, das ohne Maßnahmen zur Reduktion des Treibmittelgehalts hergestellt wurde, ausgeschnitten. Das erfindungsgemäß hergestellte Formteil, aus dem das Probestück ausgeschnitten wurde, und das herkömmlich hergestellte Formteil, aus dem das erste Vergleichsstück ausgeschnitten wurde, wurden nach dem Formen für 2 Tage bei Raumtemperatur nebeneinander gelagert, bevor die Stücke ausgeschnitten wurden.

Ein zweites Vergleichsstück mit identischen Maßen wurde aus einem herkömmlich hergestellten Polystyrol-Formteil, d.h. aus einem Formteil, das ohne Maßnahmen zur Reduktion des Treibmittelgehalts hergestellt wurde, ausgeschnitten, nachdem das Formteil für 30 Tage bei Raumtemperatur oder alternativ für 2 Tage bei einer Temperatur von 70 °C gelagert wurde.

Das Probestück und die Vergleichsstücke wurden unmittelbar nach dem Ausschneiden aus den Formstücken einem Flammtest unterzogen. Dazu wurde unter identischen Bedingungen ein Brenner in einem Winkel von 45° zu dem Probestück bzw. zu den Vergleichsstücken geneigt und die Flamme des Brenners wurde jeweils bis 1,5 mm hinter die vordere untere Probenkante verschoben, wobei die Beflammung der Stücke jeweils für eine Dauer von 15 Sekunden erfolgte. Die Flammhöhe, mit der die Probestücke bzw. die Vergleichsstücke brennen, erlaubt dabei einen Rückschluss auf den Pentangehalt der Formteile, aus denen die Stücke erhalten wurden. Das Experiment wurde sowohl mit Probestücken aus erfindungsgemäß hergestellten Formteilen als auch mit ersten und zweiten Vergleichsstücken aus nicht erfindungsgemäß hergestellten Formteilen mehrfach wiederholt.

Es zeigte sich, dass die ersten Vergleichsstücke aus nicht erfindungsgemäß hergestellten Polystyrol-Formteilen nach einer Lagerdauer von 2 Tagen mit einer Flammhöhe von ca. 18-20 cm, d.h. im Wesentlichen über die gesamte Höhe des Vergleichsstücks brannten. Die zweiten Vergleichsstücke, die aus für 30 Tage bei Raumtemperatur gelagerten herkömmlich hergestellten Formteilen erhalten wurden, brannten mit einer Flammhöhe von 6-10 cm. Die nach einer Lagerdauer von 2 Tagen aus erfindungsgemäß hergestellten Polystyrol-Formteilen ausgeschnittenen Probestücke brannten mit einer Flammhöhe von ca. 8-12 cm.

Die erfindungsgemäß hergestellten Formteile weisen daher einen ähnlichen Pentangehalt wie die zweiten Vergleichsstücke und einen im Vergleich zu den ersten Vergleichsstücken deutlich reduzierten Treibmittelgehalt auf.

### Bezugszeichenliste

- 1: Form
- 2: Vorschäumer
- 3: Puffersilo
- 4: Transporteinrichtung
- 5: verschiebliche Wand
- 6: Vorratsbehältnis
- 7a: mit dem Innenraum der Transporteinrichtung (4) verbundener Detektor
- 7b: mit dem Innenraum des Vorschäumers (2) verbundener Detektor
- 7c: mit dem Puffersilo (3) verbundener Detektor
- 8a: Temperiereinrichtung
- 8b: mit dem Innenraum des Vorschäumers (2) verbundene Zugaszuführeinrichtung
- 8c: mit dem Puffersilo (3) verbundene Zugaszuführeinrichtung
- 9a: Steuerung der Temperiereinrichtung 8a
- 9b: Steuerung der Zugaszuführeinrichtung 8b
- 9c: Steuerung der Zugaszuführeinrichtung 8c
- 10a: Leitung zwischen der Transporteinrichtung 4 und dem Detektor 7a
- 10b: Leitung zwischen dem Vorschäumer 2 und dem Detektor 7b
- 10c: Leitung zwischen dem Puffersilo 3 und dem Detektor 7c

## Patentansprüche

1. Verfahren zur Herstellung geschäumter Kunststoffformteile mit den Schritten
- Bereitstellen von Granulat aus expandierbarem Kunststoff mit einem Ausgangsgehalt an Treibmittel,
- Transportieren des Granulats in einen Vorschäumer (2) mittels einer Transporteinrichtung (4),
- Vorschäumen des Granulats zu Perlen durch eine erste thermische Behandlung innerhalb des Vorschäumers (2),
- Füllen der Perlen in eine Form (1), in der die Perlen bei einer zweiten thermischen Behandlung zu dem Kunststoffformteil geformt werden,
**dadurch gekennzeichnet, dass** mittels eines Detektors (7a, 7b) der Treibmittelgehalt von Abgas bestimmt wird, wobei das Abgas ausgewählt ist aus Gas, das aus der Transporteinrichtung (4) stammt, und Gas, das aus dem Vorschäumer (2) stammt.

2. Verfahren nach Anspruch 1, **dadurch gekennzeichnet, dass** dem Vorschäumer (2) Zugas zugeführt wird, wobei das Zugas ausgewählt ist aus Temperiermedium, insbesondere Dampf, Luft, Stickstoff, Kohlenstoffoxid und/oder Mischungen dieser.

3. Verfahren nach Anspruch 2, **dadurch gekennzeichnet, dass** die Temperatur und/oder der Volumenstrom des dem Vorschäumer (2) zugeführten Zugases in Abhängigkeit von dem Meßsignal gesteuert wird, das von dem Detektor (7a, 7b) für den Treibmittelgehalt des Abgases bestimmt wird.

4. Verfahren nach einem der voranstehenden Ansprüche, **dadurch gekennzeichnet, dass** die Transporteinrichtung (4) beheizt ist.

5. Verfahren nach Anspruch 4, **dadurch gekennzeichnet, dass** die Temperatur der Transporteinrichtung (4) in Abhängigkeit von dem Meßsignal gesteuert wird, das von dem Detektor (7a, 7b) für den Treibmittelgehalt des Abgases bestimmt wird.

6. Verfahren nach einem der voranstehenden Ansprüche, **dadurch gekennzeichnet, dass** die Perlen in der Form (1) mittels Druck durch Volumenverringerung der Form (1) zu dem Formteil geformt werden.

7. Verfahren nach einem der voranstehenden Ansprüche, **dadurch gekennzeichnet, dass** die Perlen nach dem Vorschäumen und vor dem Füllen in die Form (1) in ein Puffersilo (3) gefördert werden und zusätzlich zu der Treibmittelbestimmung des Abgases aus dem Vorschäumer (2) und/oder aus der Transporteinrichtung (4) mittels eines Detektors (7c) der Treibmittelgehalt von Abgas aus dem Puffersilo (3) bestimmt wird.

8. Verfahren nach Anspruch 7, **dadurch gekennzeichnet, dass** die Perlen in dem Puffersilo (3) von Zugas umströmt werden, dessen Temperatur und/oder Volumenstrom in Abhängigkeit von einem Meßsignal gesteuert wird, das von einem Detektor für den Treibmittelgehalt des Abgases aus dem Puffersilo (3) bestimmt wird.

9. Verfahren nach einem der voranstehenden Ansprüche, **dadurch gekennzeichnet, dass** der Detektor (7a, 7b, 7c) ein Flammenionisationsdetektor ist, dem kontinuierlich oder satzweise Abgas zugeführt wird, und das Meßsignal nur die Signalhöhe ist.

10. Verfahren nach einem der voranstehenden Ansprüche, **dadurch gekennzeichnet, dass** das Granulat expandierbares Polystyrol, expandierbares Polyethylen, expandierbares Polypropylen oder eine Mischung dieser ist.

11. Vorrichtung für ein Verfahren nach einem der voranstehenden Ansprüche mit einer Transporteinrichtung (4) für Granulat, einem für eine erste thermische Behandlung eingerichteten Vorschäumer (2) zum Vorschäumen von Granulat zu Perlen und einer für eine zweite thermische Behandlung eingerichteten Form (1) zum Formen der Perlen mittels Druck zu einem Kunststoffformteil, **gekennzeichnet durch** einen Detektor (7a, 7b), der mittels einer Leitung (10a, 10b) mit der Transporteinrichtung (4) und/oder mit dem Vorschäumer (2) verbunden ist und zur Bestimmung des Treibmittelgehalts von Abgas eingerichtet ist, das ausgewählt ist aus Abgas, das aus der Transporteinrichtung (4) stammt und Abgas, das aus dem Vorschäumer (2) stammt.

12. Vorrichtung nach Anspruch 11, **dadurch gekennzeichnet, dass** die Leitung (10a, 10b) temperiert ist.

13. Vorrichtung nach Anspruch 11 oder 12, **gekennzeichnet durch** eine Zugaszuführeinrichtung (8b), die eingerichtet ist, dem Vorschäumer (2) Zugas zuzuführen, dessen Volumenstrom und/oder Temperatur abhängig vom Meßsignal des Detektors (7a, 7b) gesteuert ist, wobei das Zugas ausgewählt ist aus Temperiermedium, insbesondere Dampf, Luft, Stickstoff, Kohlenstoffoxid und Mischungen dieser.

14. Vorrichtung nach Anspruch 11 bis 13, **gekennzeichnet durch** eine Temperiereinrichtung, die eingerichtet ist, die Transporteinrichtung (4) zu beheizen, wobei die Temperatur der Transporteinrichtung (4) abhängig vom Meßsignal des Detektors (7a, 7b) gesteuert ist.

15. Vorrichtung nach einem der Ansprüche 12 bis 14, **dadurch gekennzeichnet, dass** sie ein zwischen dem Vorschäumer (2) und der Form (1) angeordnetes Puffersilo (3) zur Aufnahme der Perlen aufweist, wobei die Vorrichtung zusätzlich zu dem Detektor (7a, 7b) zur Bestimmung des Treibmittelgehalts von Abgas aus der Transporteinrichtung (4) und/oder dem Vorschäumer (2) einen Detektor (7c) zur Bestimmung des Treibmittelgehalts des Abgases aus dem Puffersilo (3) aufweist, der mittels einer Leitung (10c) mit dem Innenraum des Puffersilos(3) verbunden ist.

16. Vorrichtung nach Anspruch 15, **dadurch gekennzeichnet, dass** die Leitung (10c) temperiert ist.

17. Vorrichtung nach einem der voranstehenden Ansprüche, **gekennzeichnet durch** nur einen Detektor (7a, 7b, 7c), der mittels einer Ventilanordnung und daran angeschlossener Leitungen mit dem Vorschäumer (2) und/oder der Transporteinrichtung (4) verbunden ist, wobei eine mit der Ventilanordnung verbundene Ventilsteuerung eingerichtet ist, den Detektor (7a, 7b, 7c) mit jeweils einem von Vorschäumer (2) und/oder der Transporteinrichtung (4) zu verbinden.

18. Vorrichtung nach einem der voranstehenden Ansprüche 15 - 17, **gekennzeichnet durch** eine Zugaszuführeinrichtung (8c), die eingerichtet ist, dem Puffersilo (3) Zugas zuzuführen, dessen Volumenstrom und/oder Temperatur abhängig vom Meßsignal des Detektors (7c) gesteuert ist.

19. Vorrichtung nach einem der voranstehenden Ansprüche, **dadurch gekennzeichnet, dass** die Form (1) zumindest eine verschiebliche Wand (5) aufweist und eingerichtet ist, die Perlen mittels Druck zu einem Kunststoffformteil zu formen.

## Claims

1. Process for producing expanded plastic material moulded parts comprising the steps of
- providing granules of expandable plastic material having an initial content of foaming agent,
- transporting the granules into a pre-foamer (2) by means of a transportation device (4),
- pre-foaming the granules to pearls by a first thermal treatment within the pre-foamer (2),
- filling the pearls into a form (1), in which the pearls by a second thermal treatment are formed to the plastic material moulded part,
**characterized in that** the content of foaming agent of exhaust gas is determined by means of a detector (7a, 7b), wherein the exhaust gas is selected from gas which originates from the transportation device (4), and gas which originates from the pre-foamer (2).

2. Process according to claim 1, **characterized in that** a feed gas is introduced into the pre-foamer (2), wherein the feed gas is selected from temperature control medium, especially steam, air, nitrogen, carbon oxide and/or mixtures of these.

3. Process according to claim 2, **characterized in that** the temperature and/or the volumetric flow of the feed gas introduced into the pre-foamer (2) is controlled in dependence on the measuring signal which is determined by the detector (7a, 7b) for the foaming agent content of the exhaust gas.

4. Process according to one of the preceding claims, **characterized in that** the transportation device (4) is heated.

5. Process according to claim 4, **characterized in that** the temperature of the transportation device (4) is controlled in dependence on the measuring signal which is determined by the detector (7a, 7b) for the foaming agent content of the exhaust gas.

6. Process according to one of the preceding claims, **characterized in that** the pearls are formed to the moulded part within the form (1) by means of pressure by a volume reduction of the form (1).

7. Process according to one of the preceding claims, **characterized in that** the pearls after the pre-foaming and prior to the filling into the form (1) are transported into a buffer silo (3) and that in addition to the determination of the foaming agent of exhaust gas from the pre-foamer (2) and/or from the transportation device (4) there is determined the foaming agent content of exhaust gas from the buffer silo (3) by means of a detector (7c).

8. Process according to claim 7, **characterized in that** the pearls in the buffer silo (3) are flown about by the feed gas, the temperature and/or volumetric flow of which is controlled in dependence on a measuring signal that is determined by a detector for the foaming agent content of the exhaust gas from the buffer silo (3).

9. Process according to one of the preceding claims, **characterized in that** the detector (7a, 7b, 7c) is a flame ionisation detector, which is fed with exhaust gas continuously or batchwise, and that the measuring signal is only the height of the signal.

10. Process according to one of the preceding claims, **characterized in that** the granules are expansible polystyrene, expansible polyethylene, expansible polypropylene or a mixture of these.

11. Device for a process according to one of the preceding claims having a transportation device (4) for granules, a pre-foamer (2) set up for a first thermal treatment for pre-foaming of granules to pearls and having a form (1) set up for a second thermal treatment for forming the pearls to a plastic material moulded part by means of pressure, **characterized by** a detector (7a, 7b) which is connected with the transportation device (4) and/or with the pre-foamer (2) by means of a duct (10a, 10b) and is set up for determination of the foaming agent content of exhaust gas, which is selected from exhaust gas which originates from the transportation device (4) and exhaust gas which originates from the pre-foamer (2).

12. Device according to claim 11, **characterized in that** the duct (10a, 10b) is temperature-controlled.

13. Device according to claim 11 or 12, **characterized by** a feed gas feeding device (8b), which is set up to introduce feed gas to the pre-foamer (2), the volumetric flow and/or temperature of which is controlled in dependence on the measuring signal of the detector (7a, 7b), wherein the feed gas is selected from a temperature control medium, especially steam, air, nitrogen, carbon oxide and mixtures of these.

14. Device according to claim 11 to 13, **characterized by** a temperature control device, which is set up to heat the transportation device (4), wherein the temperature of the transportation device (4) is controlled in dependence on the measuring signal of the detector (7a, 7b).

15. Device according to one of claims 12 to 14, **characterized in** having a buffer silo (3) for receiving the pearls arranged between the pre-foamer (2) and the form (1), wherein the device in addition to the detector (7a, 7b) for determination of the foaming agent content of exhaust gas of the transportation device (4) and/or of the pre-foamer (2) has a detector (7c) for determination of the foaming agent content of the exhaust gas from the buffer silo (3), which detector (7c) is connected to the inner volume of the buffer silo (3) by means of a duct (10c).

16. Device according to claim 15, **characterized in that** the duct (10c) is temperature-controlled.

17. Device according to one of the preceding claims, **characterized by** only one detector (7a, 7b, 7c), which is connected with the pre-foamer (2) and/or with the transportation device (4) by means of a valve arrangement and ducts connected thereto, wherein a valve control connected to the valve arrangement is set up to connect the detector (7a, 7b, 7c) with one each of the pre-foamer (2) and/or the transportation device (4).

18. Device according to one of the preceding claims 15 - 17, **characterized by** a feed gas feeding device (8c), which is set up to introduce feed gas to the buffer silo (3), the volumetric flow and/or temperature of which is controlled in dependence on the measuring signal of the detector (7c).

19. Device according to one of the preceding claims, **characterized in that** the form (1) has at least one slideable wall (5) and is set up to form the pearls to a plastic material moulded part by means of pressure.

## Revendications

1. Procédé de fabrication de pièces moulées en matière plastique expansée, comprenant les étapes de
- fourniture de granulés en matière plastique expansible ayant une teneur initiale en agent d'expansion,
- transport des granulés dans un préexpanseur (2) au moyen d'un dispositif de transport (4),
- préexpansion des granulés en perles par un premier traitement thermique dans le préexpanseur (2),
- versement des perles dans un moule (1), dans lequel les perles sont moulées dans un second traitement thermique pour constituer la pièce en matière plastique moulée,
**caractérisé en ce que** la teneur en agent d'expansion des gaz d'échappement est déterminée au moyen d'un détecteur (7a, 7b), dans lequel les gaz d'échappement sont choisis à partir du gaz provenant du moyen de transport (4) et du gaz provenant du préexpanseur (2).

2. Procédé selon la revendication 1, **caractérisé en ce que** un gaz d'alimentation est injecté dans le préexpanseur (2), dans lequel le gaz d'alimentation est choisi à partir d' un fluide de températion, en particulier la vapeur d'eau, l'air, l'azote, l'oxyde de carbone et/ou des mélanges de ceux-ci.

3. Procédé selon la revendication 2, **caractérisé en ce que** la température et/ou le débit volumique du gaz d'alimentation injecté dans le préexpanseur (2) sont contrôlés en fonction du signal de mesure qui est déterminé par le détecteur (7a, 7b) pour la teneur en agent d'expansion des gaz d'échappement.

4. Procédé selon l'une des revendications précédentes, **caractérisé en ce que** le dispositif de transport (4) est chauffé.

5. Procédé selon la revendication 4, **caractérisé en ce que** la température du dispositif de transport (4) est contrôlée en fonction du signal de mesure qui est déterminé par le détecteur (7a, 7b) pour la teneur en agent d'expansion des gaz d'échappement.

6. Procédé selon l'une des revendications précédentes, **caractérisé en ce que** les perles dans le moule (1) sont conformées sous pression par réduction du volume du moule (1) pour obtenir la pièce moulée.

7. Procédé selon l'une quelconque des revendications précédentes, **caractérisé en ce que** les perles après la préexpansion et avant le versement dans le moule (1) sont acheminées dans un silo tampon (3) et, en plus de la détermination de l'agent d'expansion des gaz d'échappement provenant du préexpanseur (2) et/ou du moyen de transport (4), la teneur en agent d'expansion des gaz d'échappement provenant du silo tampon (3) est déterminée au moyen d'un détecteur (7c).

8. Procédé selon la revendication 7, **caractérisé en ce que** les perles dans le silo tampon (3) sont noyées dans le gaz d'alimentation, dont la température et/ou le débit volumétrique sont contrôlés en fonction d'un signal de mesure, qui est déterminé par un détecteur pour la teneur en agent d'expansion des gaz d'échappement provenant du silo tampon (3).

9. Procédé selon l'une des revendications précédentes, **caractérisé en ce que** le détecteur (7a, 7b, 7c) est un détecteur de ionisation de flammes auquel des gaz d'échappement sont acheminés de manière continue ou en salves et le signal de mesure correspond seulement à la hauteur du signal.

10. Procédé selon l'une des revendications précédentes, **caractérisé en ce que** les granulés consistent en polystyrène expansible, polyéthylène expansible, polypropylène expansible ou un mélange de ceux-ci.

11. Dispositif pour un procédé selon l'une des revendications précédentes pourvu d'un dispositif de transport (4) pour granulés, d'un préexpanseur (2) prévu pour un premier traitement thermique pour la préexpansion des granulés en perles et d'un moule (1) prévu pour un second traitement thermique pour conformer les perles sous pression pour obtenir une pièce moulée en matière plastique, **caractérisé par** un détecteur (7a, 7b), relié au moyen d'un conduit (10a, 10b) au dispositif de transport (4) et/ou au préexpanseur (2) et prévu pour déterminer la teneur en agent d'expansion des gaz d'échappement, qui est choisi parmi les gaz d'échappement provenant du dispositif de transport (4) et les gaz d'échappement provenant du préexpanseur (2).

12. Appareil selon la revendication 11, **caractérisé en ce que** le conduit (10a, 10b) est tempéré.

13. Appareil selon la revendication 11 ou 12, **caractérisé par** un dispositif d'acheminement de gaz d'alimentation (8b), qui est prévu pour acheminer le gaz d'alimentation au préexpanseur (2), dont le débit volumique et/la température sont contrôlés en fonction du signal de mesure du détecteur (7a, 7b), dans lequel le gaz d'alimentation est choisi à partir du fluide de températion, en particulier la vapeur d'eau, l'air, l'azote, l'oxyde de carbone et/ou des mélanges de ceux-ci.

14. Appareil selon les revendications 11 à 13, **caractérisé par** un dispositif de températion qui est prévu pour chauffer le dispositif de transport (4) où la température du dispositif de transport (4) est contrôlée dépendamment du signal de mesure du détecteur (7a, 7b).

15. Appareil selon l'une des revendications 12 à 14, **caractérisé en ce qu'**il présente un silo tampon (3) agencé entre le préexpanseur (2) et le moule (1) pour recevoir les perles , où l'appareil présente un détecteur (7b) pour déterminer la teneur en agent d'expansion des gaz d'échappement provenant du silo tampon (3), outre le détecteur (7a, 7b) permettant de déterminer la teneur en agent d'expansion en gaz d'échappement provenant du dispositif de transport (4) et/ou du préexpanseur (2), lequel détecteur (7c) est relié à l'espace interne du silo tampon (3) à l'aide d'un conduit (10c).

16. Appareil selon la revendication 15, **caractérisé en ce que** le conduit (10c) est tempéré.

17. Appareil selon l'une des revendications précédentes, **caractérisé par** seulement un détecteur (7a, 7b, 7c), qui est relié au préexpanseur (2) et/ou au dispositif de transport (4) à l'aide d'un agencement de soupapes et des conduits connectés à celle-ci, où est prévu un système de commande de soupapes connecté à l'agencement de soupapes afin de relier le détecteur (7a, 7b, 7c) à respectivement l'un du préexpanseur et/ou du dispositif de transport (4).

18. Appareil selon l'une des revendications précédentes 15 à 17, **caractérisé par** un dispositif d'acheminement de gaz d'alimentation (8c) prévu pour acheminer le gaz d'alimentation au silo tampon (3) dont le débit volumique et/la température sont contrôlés en fonction du signal de mesure du détecteur (7c).

19. Appareil selon l'une des revendications précédentes, **caractérisé en ce que** le moule (1) présente au moins une paroi mobile (5) et est prévu pour conformer les perles sous pression pour obtenir une pièce en matière plastique moulée.
